# EUROPÄISCHE PATENTSCHRIFT

(11) **EP 1 587 199 B1**
(45) Veröffentlichungstag und Bekanntmachung des Hinweises auf die Patenterteilung: **21.12.2011**
(21) Anmeldenummer: 04009054.0
(22) Anmeldetag: 16.04.2004
(51) Int. Cl.: H02G 9/10, H02B 1/50, G02B 6/44

(54) **System zur Unterbringung von Verteilereinrichtungen von Kupfer- und/oder Glasfaserkabeln**
System for housing copper or fiber optic cable distribution equipments
Système de logement d'équipements de distribution de câbles à cuivre ou à fibres optiques

(43) Veröffentlichungstag der Anmeldung: 19.10.2005
(73) Patentinhaber: Langmatz GmbH, 82467 Garmisch-Partenkirchen (DE)
(72) Erfinder:
(74) Vertreter: Flosdorff, Jürgen

(56) Entgegenhaltungen:
- EP-A- 0 929 136
- EP-A- 0 994 543
- EP-A- 1 223 651
- DE-A1- 3 322 584
- DE-U- 1 952 453
- US-A- 3 482 030
- US-A- 5 210 374

## Beschreibung

Die Erfindung betrifft ein System zur Unterbringung von Verteilereinrichtungen für Kupfer- und/oder Glasfaserkabel gemäß dem Oberbegriff des Patentanspruchs 1.

Bisher werden derartige verteilertechnische und übertragungstechnische Einrichtungen in Gehäusen untergebracht, die über der Erde beispielsweise am Rand von Gehwegen aufgestellt werden. Ein solcher oberirdischer Standort hat den Nachteil, daß er nicht frei wählbar ist und eines Genehmigungsverfahrens bedarf und daß die Verteilerschränke bzw. -gehäuse durch Vandalismus oder beispielsweise den Aufprall eines Fahrzeugs beschädigt werden können. Ein weiterer Nachteil besteht darin, daß die Temperatur in einem oberirdischen Gehäuse großen Schwankungen ausgesetzt ist.

Die DE 33 22 584 A1 offenbart ein System gemäß dem Oberbegriff des Patentanspruchs 1. Bei diesem System wird das die Verteilereinrichtungen enthaltende Gehäuse zu Servicearbeiten aus dem Schacht heraus geklappt, wobei die Kabel stark durchgebogen werden, was bei hochbitratigen Übertragungen zum Auftreten von Bitfehlern führen kann.

US-A 5,210,374 und DE 1952 453 U offenbaren luftdichte, glockenartige Gehäuse, die beispielsweise Telefonleitungen überdecken und in den Boden eingelassen sind. Sie sind dabei nicht in einem Schacht angeordnet, in den ein Monteur einsteigt, um Montage- oder Servicearbeiten durchzuführen.

Der vorliegenden Erfindung liegt die Aufgabe zugrunde, ein System der betrachteten Art anzugeben, bei dem die oben genannten Nachteile vermieden sind.

Diese Aufgabe wird erfindungsgemäß durch die Merkmale des Patentanspruchs 1 gelöst.

Vorteilhafte Ausgestaltungen der Erfindung sind in den abhängigen Ansprüchen gekennzeichnet.

Die Erfindung sieht vor, daß die Verteilereinrichtungen in einem mit einem verschließbaren Deckel versehenen Schacht untergebracht sind, der unterflur in den Boden eingelassen ist, und daß in diesen Schacht ein wasserdichtes Gehäuse eingebaut ist, das die Verteilereinrichtungen enthält.

Hierdurch ist der Standort für die Verteilereinrichtungen von Kabeln für Telekommunikationseinrichtungen oder dergleichen ohne ein aufwändiges Genehmigungsverfahren nahezu frei wählbar, da der zugehörige Schacht an beliebigen Stellen in das Erdreich eingebracht werden kann. Da der Deckel des Schachtes verschließbar ist, sind die Kabel und deren Verteilereinrichtungen zuverlässig vor Beschädigung geschützt, was auch für den unterflur angeordneten Schacht zutrifft. Die Verteilereinrichtungen sind in ein wasserdichtes Gehäuse eingebaut, so daß auch bei Überflutung des Schachtes kein Schaden an den Telekommunikationseinrichtungen oder dergleichen auftreten kann.

Die Erfindung sieht ferner vor, daß das Gehäuse eine wasserdichte Bodenwand, durch die die Kabel mittels geeigneter Dichtungen auf wasserdichte Weise hindurchgeführt werden, wenigstens ein an der Bodenwand befestigtes Gestell, von dem die Verteilereinrichtungen und gegebenenfalls weitere Bauteile oder Baugruppen aufgenommen werden, und ein aus Seitenwänden und einer oberen Deckenwand bestehendes Gehäuseteil aufweist, das das wenigstens eine Gestell überdeckt und wasserdicht mit der Bodenwand verbunden ist. Dabei ist das Gehäuseoberteil einstückig ausgebildet und enthält keinerlei Wandöffnungen, so daß das Gehäuseoberteil praktisch eine luftdichte Glocke über der Bodenwand bildet, mit der das Gehäuseoberteil lösbar verriegelt ist.

Diese Ausbildung hat zur Folge, daß selbst dann, wenn der Schacht vollständig unter Wasser steht und die an sich wasserdichte Bodenwand des Gehäuses eine undichte Stelle aufweist, indem beispielsweise eine Dichtung in der Bodenplatte versagt, Wasser nur mit einem geringen Wasserstand unten in das Gehäuse eintreten kann, da sich in dem einteiligen Gehäuseoberteil ein Luftpolster bildet und sich damit ein Gegendruck zum eintretenden Wasser aufbaut. Dieser im ungünstigsten Fall sich innerhalb des Gehäuses einstellende Wasserstand liegt in der Größenordnung von etwa 10 cm, weshalb dieser Bereich innerhalb des Gehäuses frei von Stromanschlußeinheiten und sonstigen Anschlußfeldern, Endverschlüssen etc. bleibt.

Weiter sieht die Erfindung vor, daß das Gehäuseoberteil - nach dem Entriegeln - nach oben ziehbar ist, so daß die an dem Gestell/den Gestellen angebrachten Einrichtungen für Montage- und Servicearbeiten zugänglich sind. Das Gehäuseoberteil ist in der hochgezogenen Position an der Schachtwand arretierbar.

Durch diese Ausbildung wird durch das Öffnen des Gehäuses, d.h. das Freilegen der Verteilereinrichtungen etc. für Montage- und Servicearbeiten kein Platz in dem notwendigerweise verhältnismäßig engen Schacht in Anspruch genommen, so daß der gesamte freie Schachtraum zwischen dem wasserdichten Gehäuse bzw. dem unter dem Gehäuseoberteil angeordneten Gestell und der gegenüberliegenden Schachtwand als Arbeitsraum zu Verfügung steht.

Da weder bei Montage- noch bei Servicearbeiten an den verteilertechnischen bzw. übertragungstechnischen Einrichtungen die Kabel bewegt werden, ist das Auftreten von Bitfehlern bei hoch bitratigen Übertragungen vermieden.

Außerdem wird vorgeschlagen, daß der Schacht in seinem unteren Bereich einen Kabelaufnahmeraum enthält, durch den die durch seitliche Öffnungen einer Schachtwand in den Schacht eingeführten Kabel zur Bodenwand des wasserdichten Gehäuses verlaufen, und daß dieser Kabelraum oben durch einen zusätzlichen, begehbaren Boden begrenzt ist. Bei Arbeiten in dem Schacht steht die Serviceperson auf diesem begehbaren Boden, wodurch jeglicher Kontakt mit den darunter liegenden Kabeln ausgeschlossen ist.

Zweckmäßigerweise werden die Kabel durch Öffnungen in der Seitenwand in den Schacht eingeführt, die dem wasserdichten Gehäuse gegenüberliegt, wobei die Öffnungen durch Dichtstopfen verschlossen werden. Der Schacht hat bevorzugt eine rechteckige Grundrißform, wobei sich das wasserdichte Gehäuse nahezu über die gesamte Schmalseite des Schachtes erstreckt. Das wasserdichte Gehäuse ist nahe bei einer kurzen Seitenwand des Schachtes angeordnet, so daß sich die Kabel innerhalb des Kabelaufnahmeraums in Längsrichtung des Schachtes erstrecken.

Um bei dem Verlegen der Kabel in dem Schacht und bei der Kabeleinführung in das Gehäuse sicherzustellen, daß die Mindestbiegeradien der Kabel eingehalten werden, verlaufen vom Boden des Kabelaufnahmeraums gebogene Rampen zur Bodenwand des Gehäuses, d.h. zu den zum Durchführen der Kabel vorgesehenen Stellen.

Die Erfindung sieht demnach als Unterflur-Standort für Telekommunikationseinrichtungen etc. einen bevorzugt aus Kunststoff bestehenden Schacht vor, dessen Schachtdeckel sicher verschließbar ist. Der Schacht enthält drei Räume, nämlich an seinem Boden einen Kabelraum, darüber an einem Endbereich des Schachtes einen Technikraum mit den Verteilereinrichtungen etc. innerhalb eines wasserdichten Gehäuses und davor einen Arbeitsraum für Montage- und Servicearbeiten. Die Arbeitsperson steht dabei auf einem bevorzugt gestelzten Boden, der den darunterliegenden Kabelraum überdeckt.

Die Verteilereinrichtungen, die als Sammelbegriff u.a. Telekommunikations-Endverschlüsse, 230 V-Anschlußeinheiten, Netzgerät, Glasfaser-Anschlußfelder und weitere Bauteile enthalten können, sind durch das glockenartige luftdichte Gehäuseoberteil auch dann sicher vor Überflutung geschützt, wenn der gesamte Schacht unter Wasser steht. Somit sind die Verteilereinrichtungen sicher vor Beschädigung geschützt, wobei auch die erforderlichen Montage- und Servicearbeiten problemlos durchgeführt werden können.

Weitere Einzelheiten der Erfindung ergeben sich aus der nachfolgenden Beschreibung sowie anhand der Zeichnung. Dabei zeigen:
- Figur 1: einen bei dem erfindungsgemäßen System verwendeten Schacht mit einem modularen Schachtaufbau;
- Figur 2: den Schacht gemäß Figur 1 im zusammengesetzten Zustand;
- Figur 3: das erfindungsgemäße System in einer rein schematischen Darstellung;
- Figur 4: einen Längsschnitt durch den in das Erdreich eingebauten Schacht mit darin angeordnetem wasserdichten Gehäuse und verlegten Kabeln, wobei der Schnitt in Längsrichtung des Schachtes verläuft;
- Figur 5: einen Vertikalschnitt durch den Schacht in dessen Breitenrichtung mit hochgezogenem Gehäuseoberteil;
- Figur 6: eine Darstellung ähnlich Figur 4 mit hochgezogenem Gehäuseoberteil zur Veranschaulichung der Größenverhältnisse.

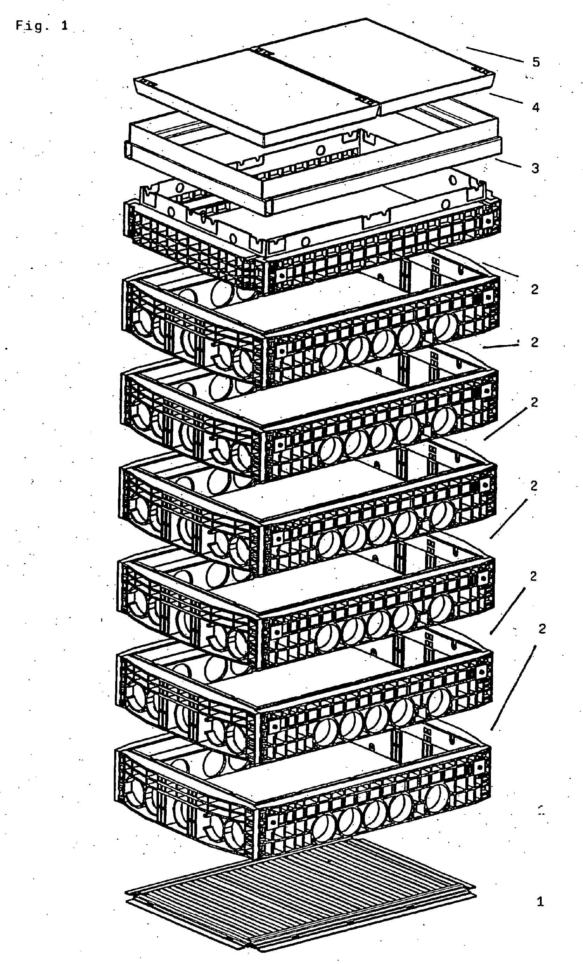

Figur 1 zeigt in einer auseinandergezogenen perspektivischen Ansicht die Bestandteile eines Schachtes mit modularem Schachtaufbau, der für das erfindungsgemäße System verwendbar ist. Der Schacht besteht aus einer Bodenplatte 1, mehreren miteinander verbindbaren Rahmenelementen 2, einem Kopfrahmen 3, einem darauf ruhenden Stahlrahmen 4 und einem Deckel 5, der durch eine nicht dargestellte Verriegelungseinrichtung verschließbar ist, die nur mit einem speziellen Schlüssel bzw. Werkzeug bedienbar ist, so daß der Schacht nur von einer hierzu befugten Person geöffnet werden kann.

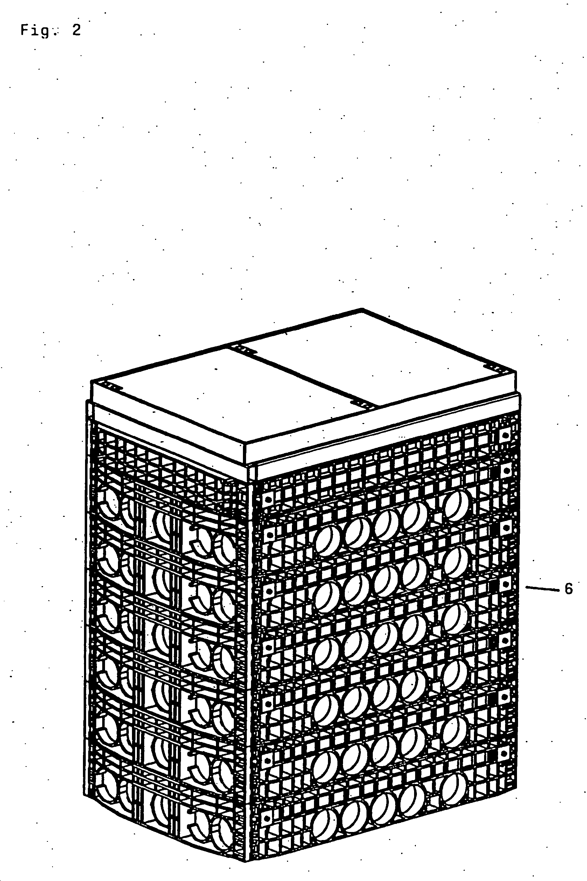

Figur 2 zeigt den Kunststoffschacht bzw. Abzweigkasten in einem zusammengesetzten Zustand. Der dargestellte Schacht enthält fünf Rahmenelemente 2 und hat eine lichte Weite von 800 mm x 1.165 mm. Die Schachthöhe beträgt ca. 1.620 mm.

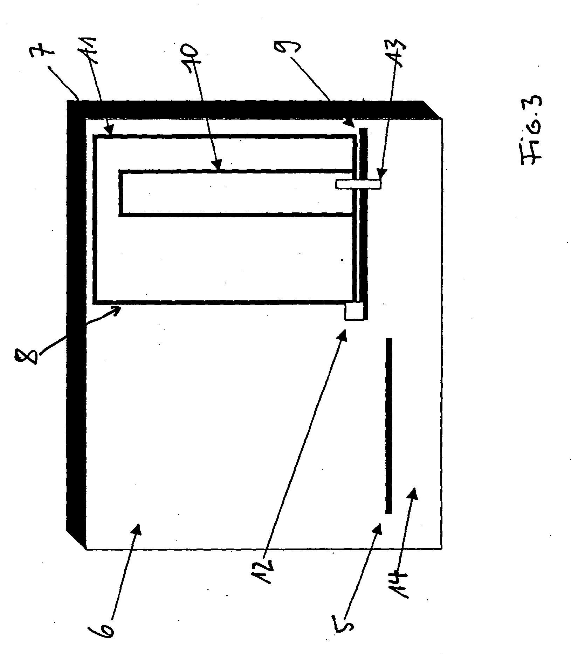

Figur 3 zeigt in einer rein schematischen Darstellung das erfindungsgemäße System. In dem Schacht 6, der im Grundriß eine Rechteckform hat, ist in der Nähe einer schmalen Seitenwand 7 ein wasserdichtes Gehäuse 8 angeordnet, das eine Bodenplatte 9, ein darauf angeordnetes ETS-Gestell 10 und ein Gehäuseoberteil 11 aufweist, das nach Art einer luftdichten Glocke das ETS-Gestell 10 überdeckt und mit der Bodenplatte 9 verriegelbar ist, was durch das Bezugszeichen 12 angedeutet ist. Durch die Bodenplatte 9 verlaufen teilbare Kabeleinführungen 13, die durch nicht dargestellte Dichtungssets wasserdicht verschließbar sind. An dem Gestell 10 und gegebenenfalls weiteren Gestellen sind die Verteilereinrichtungen wie Telekom-Endverschlüsse, Glasfaser-Anschlußfelder etc. sowie gegebenenfalls ein Netzgerät und eine 230 V-Anschlußeinheit angebracht.

Im unteren Bereich des Schachtes 6 befindet sich ein Kabelraum 14, der in dem vor dem Gehäuse 8 liegenden Bereich durch einen begehbaren Boden 15 abgedeckt ist.

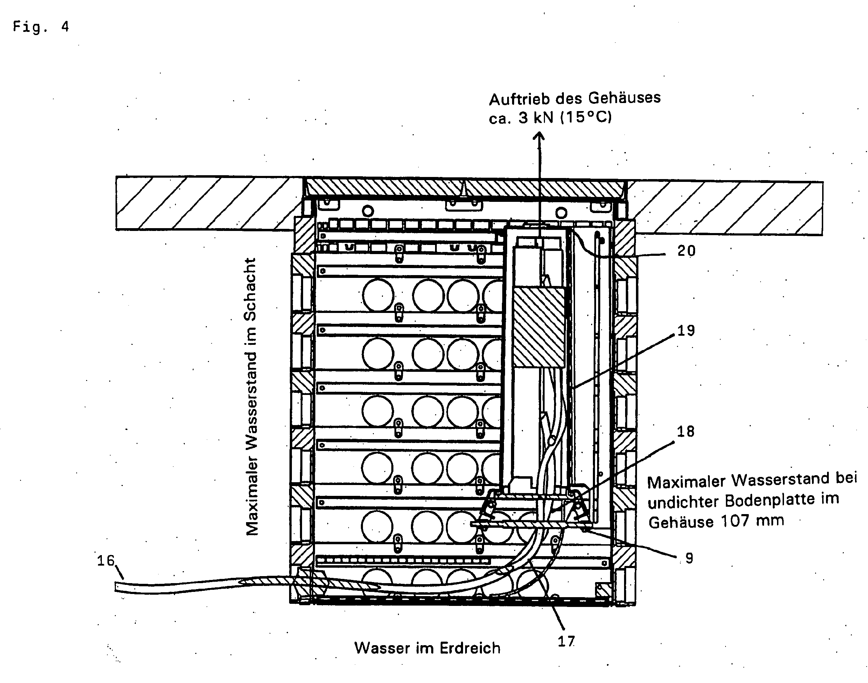

Wie Figur 4 zeigt, werden die Kabel 16 durch das unterste Rahmenelement in den Schacht 6 eingeführt, und zwar durch Ausbrechen von Sollbruchbereichen in der dem Gehäuse 8 gegenüberliegenden schmalen Seitenwand. Die verbleibenden Öffnungen werden durch Dichtstopfen verschlossen. Die Kabel 16 verlaufen unterhalb des Bodens 15 durch den Kabelraum 14 und werden entlang gebogener Rampen 17 zu der Bodenplatte 9 des wasserdichten Gehäuses 8 geführt, wobei geeignete Dichtungen 18 für einen wasserdichten Verschluß der Bodenplatte 9 sorgen. Das Gehäuseoberteil 11, das aus den Seitenwänden 19 und der oberen Deckenwand 20 besteht und dabei eine luftdichte Glocke oder Haube bildet, ist mit der Bodenplatte 9 lösbar verriegelt.

Sollte der Fall auftreten, daß der Schacht 6 vollständig überflutet wird, und sollte gleichzeitig beispielsweise durch fehlerhaftes Einbringen einer Dichtung 18 die Bodenplatte 9 des Gehäuses 8 undicht sein, so würde sich im unteren Teil des Gehäuses 8 nur ein geringer Wasserstand (in dem dargestellten Beispiel 107 mm) einstellen, da sich in dem glocken- oder haubenförmigen Gehäuseoberteil ein Druckluftposter ausbildet, das das weitere Eindringen von Wasser verhindert. Da die Verteilereinrichtungen etc. nur oberhalb des (berechenbaren) höchsten Wasserstandes eingebaut sind, kann auch in dem dargestellten ungünstigsten Fall kein Wasserschaden an den Verteilereinrichtungen entstehen.

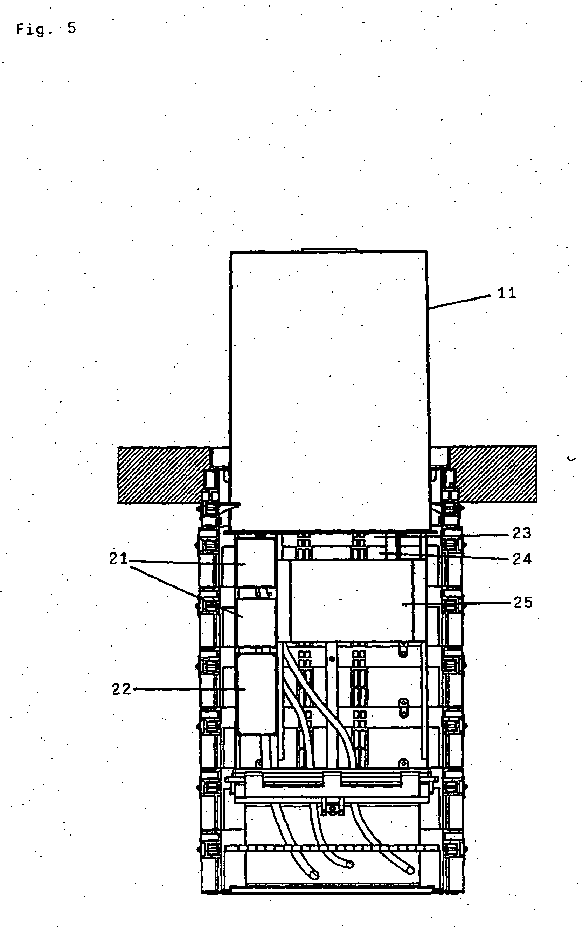

Figur 5 zeigt einen Längsschnitt durch den Schacht in dessen Breitenrichtung mit einer Ansicht des Gehäuses 8, dessen Gehäuseoberteil 11 hochgezogen ist, so daß Montage- oder Servicearbeiten an den Verteilereinrichtung durchgeführt werden können. An dem Gestell 10, das sich über die gesamte Breite des Gehäuses (und nahezu über die gesamte Breite des Schachtes) erstreckt, sind Telekom-Endverschlüsse 21, eine 230 V-Anschlußeinheit 22, ein Netzgerät 23, ein Glasfaser-Anschlußfeld 24 und ein BGT-Einbauraum 25 vorgesehen. Der untere Bereich des Einbauraums bleibt bis zu der Höhe, in der in dem oben beschriebenen Fall Wasser eintreten kann, frei von eingebauten Bauteilen.

Das Gehäuseoberteil kann in der angehobenen Position durch geeignete Mittel verriegelt werden.

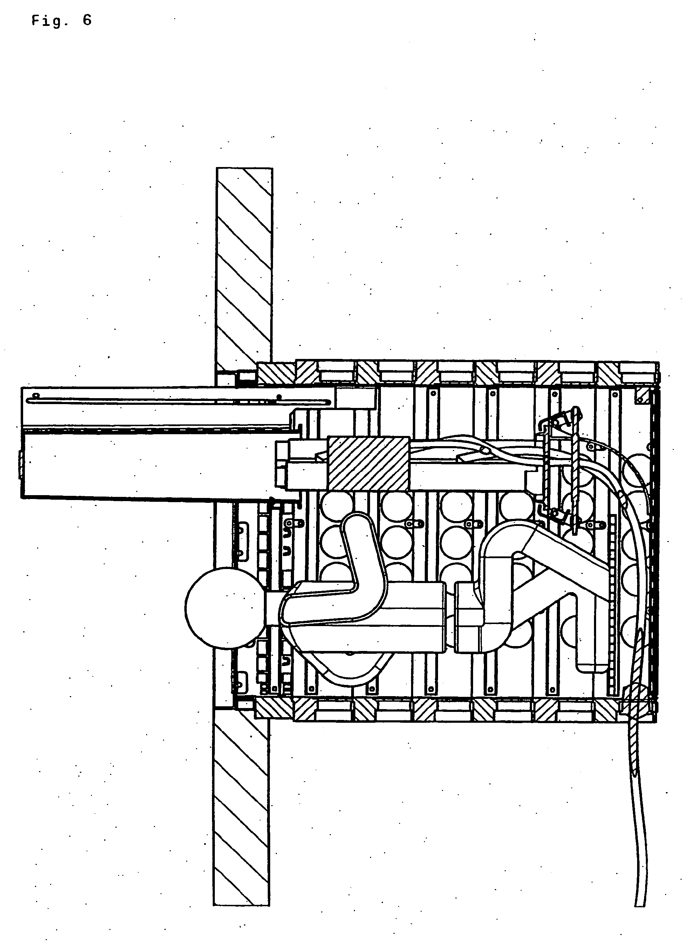

Figur 6 zeigt schematisch in einem Größenvergleich eine Arbeitsperson, die in der Arbeitsstellung auf dem begehbaren, bevorzugt aufgestelzten Boden 15 kniet. Der Größenvergleich zeigt, daß genügend Raum in dem Schacht vor dem geöffneten Gehäuse besteht, um die erforderlichen Arbeiten durchzuführen.

Da die Kabel hierbei nicht bewegt werden, wird das Auftreten von Bitfehlern bei Übertragungen vermieden.

## Patentansprüche

1. System zur Unterbringung von Verteilereinrichtungen oder dergleichen für Kupfer- und/oder Glasfaserkabel, mit einem mit einem verschließbaren Deckel (5) versehenen Schacht (6), der unterflur in den Boden einbaubar ist, und einem in den Schacht (6) eingebauten wasserdichten Gehäuse (8), in dem die Verteilereinrichtungen oder dergleichen untergebracht sind, wobei das Gehäuse (8) eine wasserdichte Bodenplatte (9), wenigstens ein an der Bodenplatte befestigtes Gestell (10), an dem die Verteilereinrichtungen oder dergleichen angebracht sind, und ein aus Seitenwänden (19) und einer oberen Deckenwand (20) bestehendes, einstückig ausgebildetes, luftdichtes Gehäuseoberteil (11) aufweist, das das wenigstens eine Gestell (10) überdeckt und wasserdicht mit der Bodenplatte (9) verbindbar ist,
wobei
sich in dem Schacht (6) vor dem Gehäuse (8) ein Arbeitsraum für Arbeiten an den Verteilereinrichtungen oder dergleichen befindet und das Gehäuseoberteil (11) nach dem Entriegeln nach oben ziehbar ist, so daß die Verteilereinrichtungen oder dergleichen für Montage- und Servicearbeiten zugänglich sind, **dadurch gekennzeichnet, dass** der Arbeitsraum groß genug zur Aufnahme einer Arbeitsperson ist und das Gehäuseoberteil in der angehobenen Lage an der Schachtwand arretierbar ist.

2. System nach Anspruch 1,
**dadurch gekennzeichnet,**
**daß** der Schacht (6) in seinem unteren Bereich einen Kabelaufnahmeraum (14) enthält, durch den die durch seitliche Öffnungen einer Schachtwand in den Schacht (6) eingeführten Kabel (16) zur Bodenplatte (9) des wasserdichten Gehäuses (8) verlaufen, und daß der Kabelaufnahmeraum (14) oben durch einen begehbaren Boden (15) begrenzt ist.

3. System nach Anspruch 2,
**dadurch gekennzeichnet,**
**daß** vom Boden des Kabelaufnahmeraums (14) gebogene Rampen (17) zur Bodenplatte (9) des Gehäuses (8) führen.

## Claims

1. A system for housing distribution devices or the like for copper and/or optical fibre cables including a shaft (6), which is provided with a closable cover (5) and may be installed buried in the ground, and a water-tight housing (8), which is installed in the shaft (6) and in which the distribution devices or the like are housed, wherein the housing (8) includes a water-tight base plate (9), at least one frame (10), which is fastened to the base plate and on which the distribution devices or the like are mounted, and an air-tight housing upper portion (11), which is of one-piece construction and consists of side walls (19) and an upper cover wall (20) and which covers the at least one frame (10) and is connectable in a water-tight manner to the base plate (9), wherein situated in the shaft (6) in front of the housing (8) there is a working space for working on the distribution devices or the like and the housing upper portion (11) may be pulled upwards, after unlocking, so that the distribution devices or the like are accessible for installation and service work, **characterised in that** the working space is large enough to accommodate a working person and the housing upper portion is lockable to the shaft wall in the raised position.

2. A system as claimed in Claim 1, **characterised in that** the shaft (6) includes a cable reception space (14) in its lower region, through which the cables, introduced into the shaft (6) through lateral openings in a shaft wall, extend to the base plate (9) of the water-tight housing (8) and that the cable reception space (14) is bounded at the top by a base (15) which may be walked on.

3. A system as claimed in Claim 2, **characterised in that** ramps (17) bent from the base of the cable reception space (14) lead to the base plate (9) of the housing (8).

## Revendications

1. Système de logement d'équipements de distribution ou d'objets similaires pour des câbles en cuivre et/ou en fibre de verre, doté d'un puits (6) qui comporte un couvercle (5) pouvant être verrouillé et peut être encastré au niveau du sol, et d'un boîtier (8) étanche à l'eau installé dans le puits (6), dans lequel sont logés les équipements de distribution ou les objets similaires, le boîtier (8) comportant une plaque de fond étanche à l'eau (9), au moins un bâti (10), fixé sur la plaque de fond, sur lequel sont installés les équipements de distribution ou les objets similaires, et une partie supérieure (11) du boîtier, qui est étanche à l'air, est formée d'un seul bloc, est composée de parois latérales (19) et d'une paroi couvrante supérieure (20), recouvre le ou les bâtis (10) et peut être reliée à la plaque de fond (9) de manière étanche à l'eau,
un espace de travail destiné à des travaux sur les équipements de distribution ou les objets similaires se trouvant dans le puits (6) devant le boîtier (8), et la partie supérieure (11) du boîtier pouvant être extraite par le haut après le déverrouillage de sorte que les équipements de distribution ou les objets similaires soient accessibles pour des travaux de montage et d'entretien,
**caractérisé en ce que** l'espace de travail est assez grand pour recevoir une personne travaillant et **en ce que** la partie supérieure du boîtier peut être arrêtée dans la position soulevée contre la paroi du puits.

2. Système selon la revendication 1,
**caractérisé en ce que** le puits (6) comporte dans sa partie inférieure un espace de réception de câbles (14) par lequel les câbles (16), introduits dans le puits (6) par des ouvertures latérales d'une paroi du puits, sont menés à la plaque de fond (9) du boîtier étanche à l'eau (8), et **en ce que** l'espace de réception de câbles (14) est limité par le haut par un plancher praticable (15).

3. Système selon la revendication 2,
**caractérisé en ce que** des rampes (17) incurvées depuis le sol de l'espace de réception de câbles (14) mènent à la plaque de fond (9) du boîtier (8).
